(19) **Europäisches Patentamt / European Patent Office / Office européen des brevets**

(11) **EP 4 568 145 A1**

(12) **EUROPEAN PATENT APPLICATION**
published in accordance with Art. 153(4) EPC

(43) Date of publication:
**11.06.2025 Bulletin 2025/24**

(21) Application number: **23849245.8**

(22) Date of filing: **26.07.2023**

(51) International Patent Classification (IPC):
**H04B 17/382** (2015.01)

(52) Cooperative Patent Classification (CPC):
**H04B 17/382; H04W 72/0446; H04W 72/0453**

(86) International application number:
**PCT/CN2023/109345**

(87) International publication number:
**WO 2024/027537 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022 CN 202210916954**

(71) Applicant: **Vivo Mobile Communication Co., Ltd.
Dongguan, Guangdong 523863 (CN)**

(72) Inventors:
• **WU, Jianming
  Dongguan, Guangdong 523863 (CN)**
• **LI, Jianzhi
  Dongguan, Guangdong 523863 (CN)**
• **YAO, Jian
  Dongguan, Guangdong 523863 (CN)**
• **PAN, Xueming
  Dongguan, Guangdong 523863 (CN)**

(74) Representative: **Lavoix
Bayerstraße 83
80335 München (DE)**

(54) **SENSING METHOD AND APPARATUS, AND COMMUNICATION DEVICE AND READABLE STORAGE MEDIUM**

(57) This application discloses a sensing method and apparatus, a communication device, and a readable storage medium. The method includes: A first network element senses a frequency domain channel to obtain a first sensing result related to a delay domain, and/or senses a time domain channel to obtain a second sensing result related to a Doppler domain. The first network element determines a target sensing signal and a corresponding target time-frequency domain resource based on the first sensing result and/or the second sensing result. The first network element senses a channel time domain and a channel frequency domain based on the target sensing signal and the corresponding target time-frequency domain resource.

FIG. 5

**Description**

**CROSS-REFERENCE TO RELATED APPLICATIONS**

This application claims priority to Chinese Patent Application No. 202210916954.1, filed on August 1, 2022 in China, which is incorporated herein by reference in its entirety.

**TECHNICAL FIELD**

This application belongs to the field of communication technologies, and in particular, to a sensing method and apparatus, a communication device, and a readable storage medium.

**BACKGROUND**

In addition to a communication capability, a future mobile communication system such as a 5G-and-Beyond (5G-and-Beyond, B5G) mobile communication system or the sixth generation (the sixth generation, 6G) mobile communication system further has a sensing capability.

One or more devices with the sensing capability can sense information about a target object, such as an orientation, a distance, and a speed, or detect, track, identify, and image a target object, an event, an environment, and the like by sending and receiving a wireless signal. In the future, with deployment of small base stations with high frequencies and large bandwidth capabilities such as millimeter waves and terahertz in a 6G network, sensing resolution may be significantly improved in comparison with centimeter waves, so that the 6G network can provide a more refined sensing service.

When the target object is unknown, especially when information about the target object such as both the distance and the speed needs to be sensed, a sensing device needs to reserve a full time-frequency domain resource. This may greatly increase a delay of communication services, and consequently, communication performance is greatly affected.

**SUMMARY**

Embodiments of this application provide a sensing method and apparatus, a communication device, and a readable storage medium, which can solve the problem of how to determine, in a targeted manner, radio resources required for communication and sensing.

According to a first aspect, a sensing method is provided, including:

A first network element senses a frequency domain channel to obtain a first sensing result related to a delay domain, and/or senses a time domain channel to obtain a second sensing result related to a Doppler domain; the first network element determines a target sensing signal and a corresponding target time-frequency domain resource based on the first sensing result and/or the second sensing result; and the first network element senses a channel time domain and a channel frequency domain based on the target sensing signal and the corresponding target time-frequency domain resource.

According to a second aspect, a sensing apparatus is provided, including:

a first sensing module, configured to: sense a frequency domain channel to obtain a first sensing result related to a delay domain, and sense a time domain channel to obtain a second sensing result related to a Doppler domain;
a determining module, configured to determine a target sensing signal and a corresponding target time-frequency domain resource based on the first sensing result and/or the second sensing result; and
a second sensing module, configured to sense a channel time domain and a channel frequency domain based on the target sensing signal and the target time-frequency domain resource.

According to a third aspect, a communication device is provided. The communication device includes: a processor, a memory, and a program or instructions that are stored in the memory and that can be carried out on the processor, and when the program or the instructions are executed by the processor, the steps of the method according to the first aspect are implemented.

According to a fourth aspect, a readable storage medium is provided. The readable storage medium stores a program or instructions. When the program or the instructions are executed by a processor, the steps of the method according to the first aspect are implemented.

According to a fifth aspect, a chip is provided. The chip includes a processor and a communication interface. The communication interface is coupled to the processor. The processor is configured to run a program or instructions to implement the steps of the method according to the first aspect.

According to a sixth aspect, a computer program/program product is provided. The computer program/program product is stored in a non-transient storage medium, and the program/program product is executed by at least one processor to implement the steps of the method according to the first aspect.

According to a seventh aspect, a communication system is provided. The communication system includes a terminal and a network device, where the terminal is configured to implement the steps of the method according to the first aspect, and the network device is configured to implement the steps of the method according to the first aspect.

In the embodiments of this application, a channel delay and/or Doppler are/is measured through a sensing function, and the radio resources required for communication and sensing are flexibly updated according to specific conditions of the delay domain and/or the Doppler domain, to optimize the use of the radio resources, and flexibility of using the radio resources is improved.

## BRIEF DESCRIPTION OF THE DRAWINGS

FIG. 1 is a schematic diagram of a downlink reference signal configuration;
FIG. 2a is a schematic diagram of a MIMO channel of a first antenna port;
FIG. 2b is a schematic diagram of a MIMO channel of a second antenna port;
FIG. 3a and FIG. 3b are schematic diagrams of estimation of a MIMO multi-path channel;
FIG. 4 is a schematic architecture diagram of a wireless communication system according to an embodiment of this application;
FIG. 5 is a flowchart of a sensing method according to an embodiment of this application;
FIG. 6a is a schematic diagram of SC Type-1 according to an embodiment of this application;
FIG. 6b is a schematic diagram of SC Type-2 according to an embodiment of this application;
FIG. 6c is a schematic diagram of SC Type-3 according to an embodiment of this application;
FIG. 6d is a schematic diagram of SC Type-4 according to an embodiment of this application;
FIG. 7a is a schematic diagram of a sensing signal of SC Type-1 according to an embodiment of this application;
FIG. 7b is a schematic diagram of a sensing signal of SC Type-2 according to an embodiment of this application;
FIG. 7c is a schematic diagram of a sensing signal of SC Type-3 according to an embodiment of this application;
FIG. 7d is a schematic diagram of a sensing signal of SC Type-4 according to an embodiment of this application;
FIG. 8a and FIG. 8b are schematic diagrams of characteristics of sensing channels in frequency domain and delay domain according to an embodiment of this application;
FIG. 8c and FIG. 8d are schematic diagrams of characteristics of sensing channels in time domain and Doppler domain according to an embodiment of this application;
FIG. 8e is a schematic diagram of characteristics of sensing channels in time-frequency domain and delay-Doppler domain according to an embodiment of this application;
FIG. 9 is a schematic diagram of a sensing apparatus according to an embodiment of this application;
FIG. 10 is a schematic diagram of a terminal according to an embodiment of this application;
FIG. 11 is a schematic diagram of a network device according to an embodiment of this application; and
FIG. 12 is a schematic diagram of a communication device according to an embodiment of this application.

## DETAILED DESCRIPTION

The following clearly describes technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that technologies described in the embodiments of this application are not limited to a Long Term Evolution (Long Term Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communication system.

For the convenience of understanding the embodiments of this application, the following technical points will be introduced first:

1. Introduction of a wireless sensing result (referred to as a sensing result for short in the following)

The sensing result includes but is not limited to the following aspects:

(1) A position/trajectory information of a sensed object, for example, accurate position information is private;
(2) Characteristics of a sensed object (such as human body characteristics), for example, body contour characteristics, face information, whether the heartbeat is accelerating, whether being short of breath, and other information is private;
(3) Health: For example, blood oxygen, blood pressure, sleep quality and other information of a person belong to personal private information;
(4) Map construction/three dimensions (Three Dimensions, 3D) environment reconstruction: Map information or environment reconstruction information of some sensitive areas or sensitive buildings belongs to private information;
(5) Radar: For example, results of radar ranging, radar speed measurement, and radar angle measurement, and sensing results for some sensed objects may be private; and
(6) Imaging: For example, imaging results of some sensed objects are private.

2. Introduction of integrated sensing and communication

Integrated sensing and communication means that in a same system, a design of integrated sensing and communication functions is implemented through spectrum sharing and hardware sharing. When information is transmitted, the system can sense information such as an orientation, a distance, and a speed, and detect, track, and identify a target device or an event. A communication system and a sensing system cooperate with each other, to improve overall performance and bring better service experience.

Integrated communication and radar is a typical application of integrated sensing and communication (integration of communication and sensing). In the past, a radar system and a communication system are strictly distinguished because of different research objects and focuses, and the two systems are studied independently in most scenarios. In fact, the radar system and the communication system are also typical ways of information sending, obtaining, processing, and exchange, and have many similarities in working principle, system architecture, and frequency band. The design of integrated communication and radar has great feasibility, which is mainly reflected in the following aspects: First, both a communication system and a sensing system are based on an electromagnetic wave theory, and information is obtained and transferred by transmitting and receiving an electromagnetic wave; then, both the communication system and the sensing system have antenna, transmit end, receive end, signal processor, and other structures, and there is great overlap in hardware resources; with the development of technology, there is more and more overlap between the communication system and the sensing system in an operating band; and there are similarities in key technologies such as signal modulation, reception detection, and waveform design. Integration of communication and radar systems can bring many advantages, such as reducing costs, reducing size, reducing power consumption, improving spectrum efficiency, and reducing mutual interference, thereby improving overall performance of the system.

3. Typical scenarios for integrated sensing and communication

Typical scenarios for integrated sensing and communication are shown in Table 1.

Table 1: Typical scenarios for integrated sensing and communication

| Wireless sensing categories | Sensing functions | Application scenarios |
|---|---|---|
| Large-scale macro sensing category | Weather, air quality, and the like | Atmosphere, agriculture, life services |

(continued)

| Wireless sensing categories | Sensing functions | Application scenarios |
|---|---|---|
| | Vehicle flow (intersection) and pedestrian flow (subway entrance) | Smart city, intelligent transportation, and business services |
| | Animal movement, migration, and the like | Animal husbandry, ecological environmental protection, and the like |
| | Target tracking, ranging, speed measurement, outline, and the like | Many application scenarios of conventional radar |
| | Three-dimensional map construction | Intelligent driving, navigation, and smart city |
| Close-range refined sensing category | Action posture recognition | Smart interaction of smart phones, games, and smart household |
| | Heartbeat, breathing, and the like | Health and medical care |
| | Imaging, material detection, and the like | Security inspection, industry, and the like |

4. Channel characteristics in delay domain and Doppler domain

A single antenna channel is used as an example, in general, a receiving channel may be described as a linear time-varying system, namely:

$$r(t) = \int H(t,f)X(f)e^{j2\pi ft}df = \int_0^{\tau_{max}} h(t,\tau)x(t-\tau)d\tau$$

$$= \int_0^{\tau_{max}} \int_{-v_{max}/2}^{v_{max}/2} C(v,\tau)x(t-\tau)e^{j2\pi vt}dfd\tau$$

, where

h(t, τ) is a time domain-delay domain channel, x(t) represents a transmission signal, X(f) is Fourier transform of x(t), and

$$H(t,f) = \int_0^{\tau_{max}} h(t,\tau)e^{-j2\pi f\tau}d\tau$$

, where

$\tau_{max}$ is a maximum delay in the delay domain.

A delay domain-Doppler domain channel may be expressed as:

$$C(v,\tau) = \int h(t,\tau)e^{-j2\pi vt}dv = \int\int H(t,f)e^{j2\pi\tau f}e^{-j2\pi vt}dtdf,$$

, where

a physical discrete path model in time-frequency domain may be simplified as:

$$H(t, f) = \sum_{n=1}^{N_p} \beta_n e^{\phi_n} e^{-j2\pi\tau_n f} e^{j2\pi v_n t}$$

, where

$\beta_n$ and $\phi_n$ are respectively an envelope and a phase of the channel in an $n^{th}$ discrete path, and $N_p$ represents a number of propagation paths from the transmit end to the receive end.

A physical discrete path model in delay-Doppler domain may be simplified as:

$$C(v, \tau) = \sum_{n=1}^{N_p} \beta_n e^{\phi_n} \delta(\tau - \tau_n) \delta(v - v_n)$$

It should be noted that, a number of physical discrete paths in time-frequency domain and a number of physical discrete paths in delay-Doppler domain are constant. This feature can be considered in a measurement process of integrated sensing and communication.

5. Design manner of a reference signal

In new radio (New Radio, NR), different reference signals (Reference Signal, RS) are designed for different purposes. As shown in Table 2, NR reference signals include an NR down-link (Down-Link, DL) reference signal, an NR up-link (Up-Link, UL) reference signal, and an NR sidelink (Sidelink) reference signal.

Table 2: NR related reference signal

| NR Down-Link RS | NR Up-Link RS | NR Sidelink RS |
|---|---|---|
| Physical downlink shared channel (Physical Downlink Shared Channel, PDSCH)-demodulation reference signal (Demodulation Reference Signal, DMRS) | Physical uplink shared channel (Physical Uplink Shared Channel, PUSCH)-DMRS | Physical sidelink shared channel (Physical Sidelink Shared Channel, PSSCH)-DMRS |
| Physical downlink control channel (Physical Downlink Control Channel, PDCCH)-DMRS | Physical uplink control channel (Physical Uplink Control Channel, PUCCH)-DMRS | PSCCH-DMRS |
| Physical broadcast channel (Physical Broadcast Channel, PBCH)-DMRS | PTRS | PSSCH-PTRS |
| Phase-tracking reference signal (Phase-Tracking Reference Signal, PTRS) | Sounding reference signal (Sounding Reference Signal, SRS) | Physical sidelink broadcast control channel (Physical Sidelink Broadcast Control Channel, PSBCH)-DMRS |
| Channel state information-reference signal (Channel State Information-Reference Signal, CSI-RS) | | CSI-RS |
| Remote interference management reference signal (RIM reference signal, RIM-RS) | | |
| Positioning reference signal (Positioning Reference Signal, P-RS) | | |

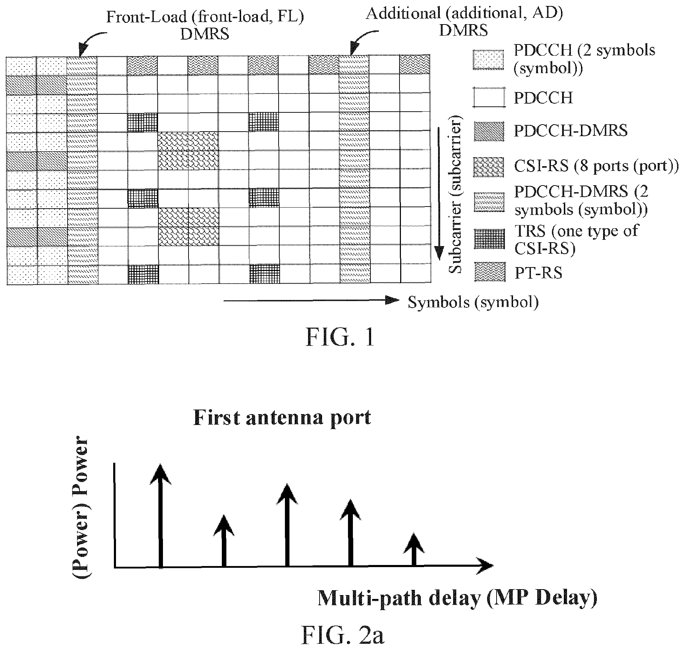

Structure design of NR reference signal (Reference Signal, RS) basically follows a reference signal structure of long term evolution (Long Term Evolution, LTE), and realizes characteristics of adapting to operation and changes in various frequency bands and scenarios, with very high flexibility. FIG. 1 shows an example of a downlink reference signal structure. If a reference signal is continuously transmitted, it may cause design restrictions on possible reference signal and channel design in a future version. Therefore, in NR, specifying a continuously transmitted reference signal (such as a cell reference signal (Cell Reference Signal, CRS) in LTE) is avoided as much as possible, and a function of the CRS is realized by using a plurality of reference signals.

Specifically, the plurality of reference signals are reference signals related to channel state information estimation, data demodulation and time/frequency tracking, and the like, for example, a CSI-RS, a demodulation reference signal (Demodulation Reference Signal, DM-RS), a tracking reference signal (tracking reference signal, TRS), and the like. The DM-RS can track a fluctuation speed of a wide range of channels properly, and designate an additional DM-RS with a structure of mapping DM-RS at the front of a data channel and additional mapping of 0-3 symbols to suppress overheads. The TRS and the CSI-RS have same signal sequence generation. However, the TRS is transmitted in an interval of 4 subcarriers and 4 orthogonal frequency division multiplexing (Orthogonal Frequency Division Multiplexing, OFDM) symbols, so sufficient tracking accuracy can be achieved with proper overheads.

In a high frequency band, phase noise is a serious problem. Therefore, in NR, a phase-tracking reference signal (Phase-Tracking Reference Signal, PT-RS) is newly designated as a terminal-specific reference signal.

6. DM-RS design method for single carrier frequency division multiple accessing (Single Carrier Frequency Division Multiple Accessing, SC-FDMA).

In an SC-FDMA system, a DM-RS is designed by using Zadoff-Chu (ZC) series. For M antenna ports of multiple-input multiple-output (Multiple-Input Multiple-Output, MIMO), there are M frequency domain ZC sequences, each with a length of $N_{ZC}$, and each ZC sequence is cyclically shifted by $N_S$ subcarriers. Therefore, an $m^{th}$ ZC sequence may be represented by using $x_q[(n + mN_S) \bmod N_{ZC}]$.

$$N_S = N_{ZC}/M,$$

$N_{ZC} = 12$, $m = 0,1, ..., M$, and $n = 0,1, ..., N_{ZC}$.

For example, when $M = 2$, a MIMO channel may include a first antenna port and a second antenna port, so initial positions of ZC series may be represented by using $mN_S = 0$ and $mN_S = 12$ respectively.

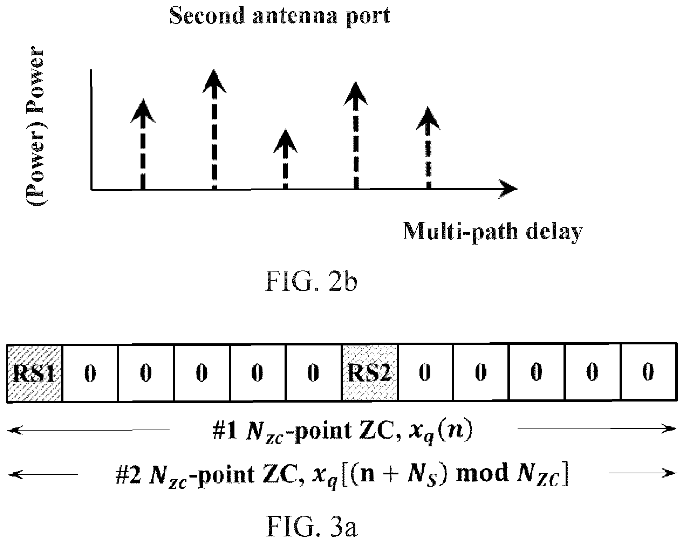

When the MIMO channel is in a time domain multi-path (Multi-path)$L = 5$, a first antenna port and a second antenna port of the MIMO channel are shown in FIG. 2a and FIG. 2b.

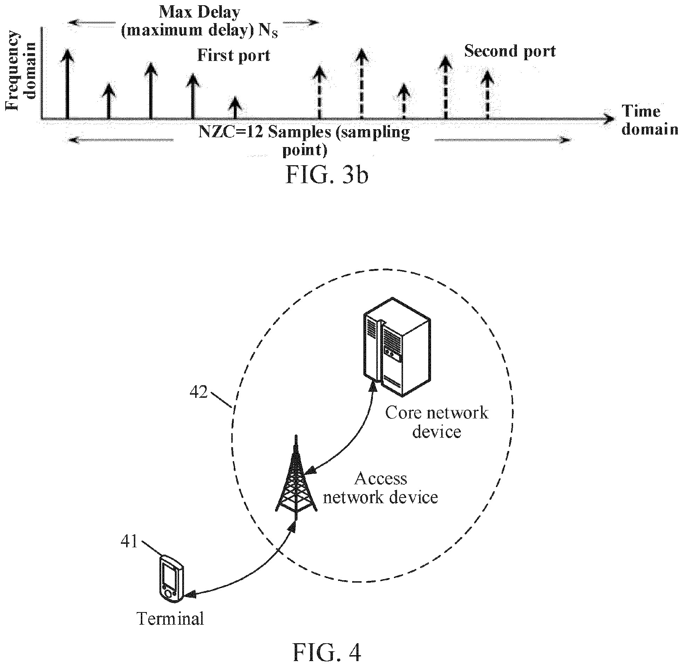

It is relatively simple to use a ZC signal in frequency domain, that is, a received ZC signal is first subjected to inverse discrete Fourier transform (Inverse Discrete Fourier Transform, IDFT), and then a correlation function operation is performed. In this way, a delay and a phase of a multi-path channel can be obtained, and a frequency channel of each port can be estimated through discrete Fourier transform (Discrete Fourier Transform, DFT). As shown in FIG. 3a and FIG. 3b.

Referring to FIG. 4, FIG. 4 is a block diagram of a wireless communication system to which the embodiments of this application can be applied. The wireless communication system includes a terminal 41 and a network device 42. The terminal 41 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (household devices with wireless communication functions, such as a refrigerator, a television, a washing machine, or furniture), a game console, a personal computer (personal computer, PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, a game console, and the like. It should be noted that, a specific type of the terminal 41 is not limited in the embodiments of this application.

The network device 42 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access node, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a location management function (Location Management Function, LMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It should be noted that, in the embodiments of this application, the core network device in the NR system is merely used as an example for description, but a specific type of the core network device is not limited.

The following describes in detail the sensing method and apparatus, a communication device, and a readable storage medium provided in the embodiments of this application through some embodiments and application scenarios thereof with reference to the accompanying drawings.

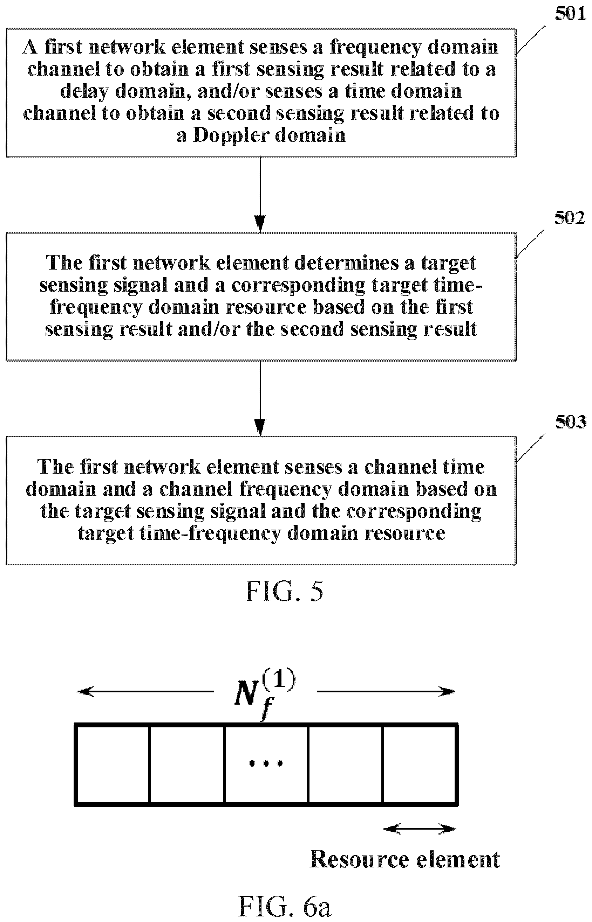

Referring to FIG. 5, an embodiment of this application provides a sensing method, applied to a first network element, and the first network element includes, but is not limited to, at least one of a terminal, a network device, a sensing device, a sensing network function, a sensing network element, a sensing management function (Sensing Management Function, SensingMF), and other network elements with a transceiver function. Specific steps include: Step 501, Step 502, and Step 503.

Step 501: A first network element senses a frequency domain channel to obtain a first sensing result related to a delay domain, and/or senses a time domain channel to obtain a second sensing result related to a Doppler domain.

In Step 501, the first network element may first sense the frequency domain channel to obtain the first sensing result related to the delay domain, and then sense the time domain channel to obtain the second sensing result related to the Doppler domain; or may first sense the time domain channel to obtain the second sensing result related to the Doppler domain, and then sense the frequency domain channel to obtain the first sensing result related to the delay domain; or may sense the frequency domain channel to obtain the first sensing result related to the delay domain while sensing the time domain channel to obtain the second sensing result related to the Doppler domain.

It can be understood that the frequency domain channel and the delay domain channel may be converted through Fourier transform. Similarly, a time domain channel and a Doppler domain channel may also be converted through Fourier transform. A receiving channel is a frequency domain channel and a time domain channel, and a delay domain channel and a Doppler domain channel are obtained through Fourier transform.

Step 502: The first network element determines a target sensing signal and a corresponding target time-frequency domain resource based on the first sensing result and/or the second sensing result.

Optionally, the target sensing signal may be a sensing signal of integrated sensing and communication, such as a sensing signal of sub-channel type-4 (SC Type-4), but it is certainly not limited to this.

Step 503: The first network element senses a channel time domain and a channel frequency domain based on the target sensing signal and the corresponding target time-frequency domain resource.

In an implementation of this application, optionally, that the first network element determines a target sensing signal and a corresponding target time-frequency domain resource based on the first sensing result and/or the second sensing result may include:

The first network element predicts a delay domain channel and/or a Doppler domain channel based on the first sensing result and/or the second sensing result, to obtain a maximum value of a target channel;
the first network element determines the target sensing signal based on the maximum value of the target channel; and
the first network element determines, based on a sensing demand and/or an actual situation of a sensing channel, the time-frequency domain resource corresponding to the target sensing signal, where
the target channel includes at least one of a delay domain channel and a Doppler domain channel.

In an implementation of this application, optionally, the sensing demand may include at least one of the following:

(1) a maximum value of the target channel;
for example, the maximum value of the target channel includes at least one of a maximum value in delay domain (for example, a maximum delay in delay domain) and a maximum value in Doppler domain (for example, a maximum Doppler shift).
(2) a number of sensed multi-path signals;

(3) a maximum delay of a sensed multi-path signal;

a maximum distance may be determined based on the maximum delay.

(4) a maximum Doppler shift of the sensed multi-path signal;

a maximum speed may be determined based on the maximum Doppler shift.

(5) a granularity of a sensing measurement quantity; and

for example, a distance granularity, a delay granularity, a speed granularity, a Doppler shift granularity, and the like.

(6) accuracy of a sensing measurement quantity.

For example, distance accuracy, delay accuracy, speed accuracy, Doppler shift accuracy, and the like.

For example, the first network element may first predict the delay domain and/or the Doppler domain, and obtain a maximum value of each domain. Once obtaining the maximum value of the delay domain and/or the Doppler domain, the first network element may effectively adjust a size of a sensing resource based on a maximum sensing demand of each domain and a corresponding granularity by reselecting a different sub-channel type (for example, SC Type-4).

In an implementation of this application, optionally, that a first network element senses a frequency domain channel to obtain a first sensing result related to a delay domain, and/or senses a time domain channel to obtain a second sensing result related to a Doppler domain includes:

The first network element senses, based on first information, the frequency domain channel to obtain the first sensing result related to the delay domain, and senses the time domain channel to obtain the second sensing result related to the Doppler domain, where

the first information includes one of the following:

(1) a periodic parameter;

that is, the first network element may periodically perform Step 501 to Step 503, to adaptively update radio resources required for communication and sensing. Periodic execution of the first network element may be completed by using a radio resource control (Radio Resource Control, RRC) configuration.

(2) an aperiodic parameter; and

that is, the first network element may non-periodically perform Step 501 to Step 503, to adaptively update radio resources required for communication and sensing. Aperiodic execution of the first network element may be triggered to be completed by using layer 1 (Layer 1, L1) signaling or medium access control (Medium Access Control, MAC) - (Control Element, CE) signaling.

(3) channel variation information.

that is, the first network element may perform Step 501 to Step 503 based on a variation of the delay domain channel and/or the Doppler domain channel, and adaptively update radio resources required for communication and sensing.

In an implementation of this application, optionally, the sensing a frequency domain channel to obtain a first sensing result, and sensing a time domain channel to obtain a second sensing result includes:

sensing the frequency domain channel based on a second sensing signal and a corresponding frequency domain resource to obtain the first sensing result related to the delay domain; and

sensing the time domain channel based on a third sensing signal and a corresponding time domain resource to obtain the second sensing result related to the Doppler domain.

Optionally, the second sensing signal may be a sensing signal of integrated sensing and communication, such as a sensing signal of sub-channel type-1 (Sub-channel Type-1, SC Type-1) and/or sub-channel type-2 (SC Type-2), and the third sensing signal may be a sensing signal of integrated sensing and communication, such as a sensing signal of sub-channel type-3 (SC Type-3).

To be specific, in a sensing process, the first network element may complete a required sensing function while minimizing the sensing resources by using different sub-channel types according to different sensing demands and/or an actual situation of the sensing channel.

It is worth noting that minimizing the sensing resources is equivalent to leaving more resources for communication transmission, thereby effectively realizing a service of integrated sensing and communication.

In an implementation of this application, optionally, the method further includes:

The first network element adjusts, based on a first parameter, a size of the frequency domain resource corresponding to the second sensing signal, where

the first parameter represents an interval between two adjacent frequency domain resources.

In an implementation of this application, optionally, the second sensing signal includes sensing signals of SC Type-1 and/or SC Type-2, and in a case that a value of the first parameter is 1, the frequency domain resource corresponding to the second sensing signal includes all resources of SC Type-1 and/or SC Type-2; or

in a case that the value of the first parameter is greater than 1, the frequency domain resource corresponding to the second sensing signal includes a part of the resources of SC Type-1 and/or SC Type-2.

In an implementation of this application, optionally, that the first network element adjusts, based on a first parameter, a size of the frequency domain resource corresponding to the second sensing signal includes:

in a case that a maximum value of the delay domain is unable to be determined, determining, based on the first parameter, that the frequency domain resource corresponding to the second sensing signal includes all resources of SC Type-1 and/or SC Type-2, where a value of the first parameter is 1; or

in a case that a delay of the delay domain in the first sensing result is less than the maximum value of the delay domain, reducing the size of the frequency domain resource corresponding to the second sensing signal by adjusting the first parameter.

In an implementation of this application, optionally, SC Type-1 includes a pure OFDM-based sub-channel; and/or

a sensing signal of SC Type-1 is determined based on at least one of a sub-channel frequency domain resource length in a frequency domain direction and the interval between two adjacent frequency domain resources.

In an implementation of this application, optionally, SC Type-2 includes a frequency domain spread sequence sub-channel;

and/or

a sensing signal of SC Type-2 is determined based on at least one of a sub-channel frequency domain resource length in a frequency domain direction and the interval between two adjacent frequency domain resources.

In an implementation of this application, optionally, the method further includes:

The first network element adjusts, based on a second parameter, a size of the time domain resource corresponding to the third sensing signal, where

the second parameter represents an interval between two adjacent time domain resources.

In an implementation of this application, optionally, the third sensing signal includes a sensing signal of SC Type-3, and in a case that a value of the second parameter is 1, the time domain resource corresponding to the third sensing signal includes all resources of SC Type-3; or

in a case that the value of the second parameter is greater than 1, the time domain resource corresponding to the third sensing signal includes a part of the resources of SC Type-3.

In an implementation of this application, optionally, that the first network element adjusts, based on a second parameter, a size of the time domain resource corresponding to the third sensing signal includes:

in a case that a maximum value of the Doppler domain is unable to be determined, determining, based on the second parameter, that the time domain resource corresponding to the third sensing signal includes all resources of SC Type-3, where a value of the second parameter is 1; or

in a case that the Doppler domain in the second sensing result is less than the maximum value of the Doppler domain, reducing the size of the time domain resource corresponding to the third sensing signal by adjusting the second parameter.

In an implementation of this application, optionally, SC Type-3 includes a time domain-based spread sequence sub-channel;

and/or

a sensing signal of SC Type-3 is determined based on at least one of a sub-channel time domain resource length in a time domain direction and the interval between two adjacent time domain resources.

In an implementation of this application, optionally, the method further includes:

The first network element adjusts, based on a third parameter and/or a fourth parameter, a size of the time-frequency domain resource corresponding to the target sensing signal, where

the third parameter represents an interval between two adjacent frequency domain resources, and the fourth parameter represents an interval between two adjacent time domain resources.

In an implementation of this application, optionally, the target sensing signal includes a sensing signal of sub-channel type-4 (SC Type-4), and in a case that a value of the third parameter is 1, and a value of the fourth parameter is 1, the time-frequency domain resource corresponding to the target sensing signal includes all resources of SC Type-4; or in a case that the value of at least one of the third parameter and the fourth parameter is greater than 1, the time-frequency domain resource corresponding to the target sensing signal includes a part of the resources of SC Type-4.

In an implementation of this application, optionally, SC Type-4 includes a time-frequency domain-based spread sequence sub-channel;

and/or

a sensing signal of SC Type-4 is determined based on at least one of a sub-channel frequency domain resource length in a frequency domain direction, a sub-channel time domain resource length in a time domain direction, the interval between two adjacent frequency domain resources, and the interval between two adjacent time domain resources.

In this embodiment of this application, four different sensing sub-channel types (SC Type-1, SC Type-2, SC Type-3, SC Type-4) are considered, that is, sub-channel types with different functions are formed for a frequency domain, a time domain, or a time-frequency domain. Effectively, each sub-channel type may be defined by using a simple sub-channel related parameter, and a resource structure and a size of a sub-channel are flexibly adjusted.

In an implementation of this application, optionally, at least one of the sensing signal of SC Type-1, the sensing signal of SC Type-2, the sensing signal of SC Type-3, and the sensing signal of SC Type-4 is determined based on an RRC configuration.

In this embodiment of this application, a channel delay and/or Doppler are/is measured through a sensing function, and the radio resources required for communication and sensing are flexibly updated according to specific conditions of the delay domain and/or the Doppler domain, to optimize the radio resources.

To better understand the implementations of this application, Embodiment 1 to Embodiment 5 are described below.

Embodiment 1: Sub-channel design for integrated sensing and communication

In this application, integrated sensing and communication may be realized by using an OFDM system. Data communication and sensing are transmitted and measured by using a resource element (Resource Element, RE), a resource block (Resource Block, RB), or other resource units. It should be noted that, a resource unit of data communication and sensing resources may be RE, and the resource unit may also be extended to any resource unit.

Specifically, data communication and sensing are transmitted and measured by defining a sub-channel (Sub-channel, SC). The sub-channel includes REs, and may be defined and classified into four types, as shown in FIG. 6a to FIG. 6d.

(1) SC Type-1: Pure OFDM-based sub-channel (Pure OFDM-based SC). $N_f^{(1)}$ is a number of sub-channel frequency domain resource units in a frequency domain direction. The resource unit may be an RE, an RB, or another defined resource unit, as shown in FIG. 6a.

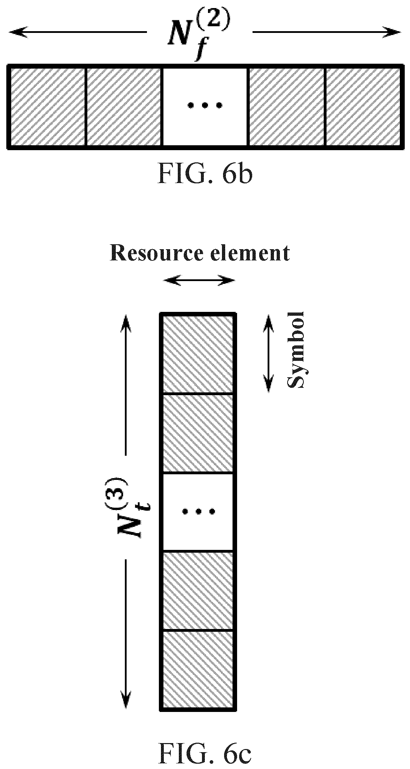

(2) SC Type-2: Frequency domain-based spread sequence sub-channel. A sensing signal of SC Type-2 is similar to a DFT-spread (spread) -OFDM reference signal. $N_f^{(2)}$ is a number of sub-channel frequency domain resource units in a frequency domain direction, as shown in FIG. 6b.

(3) SC Type-3: Time domain-based spread sequence sub-channel. $N_t^{(3)}$ is a number of sub-channel time domain resource units in a time domain direction, as shown in FIG. 6c.

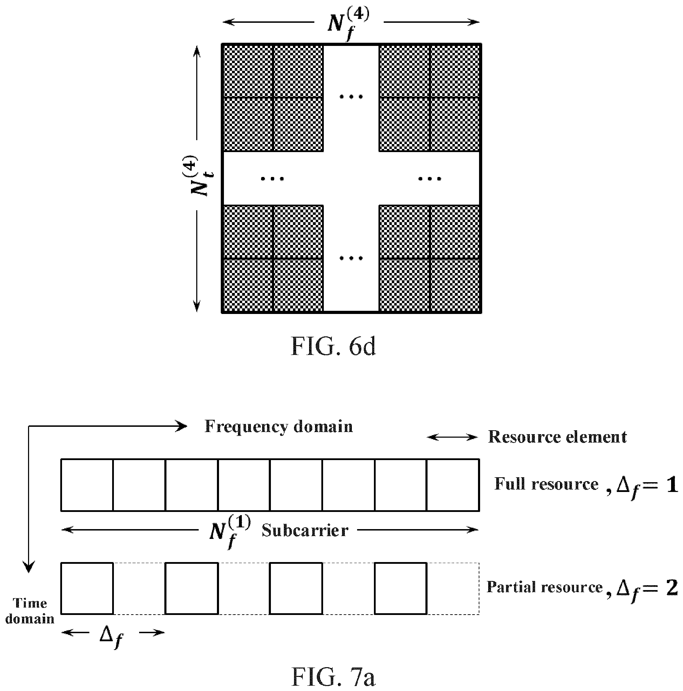

(4) SC Type-4: Time-frequency domain-based spread sequence sub-channel. SC Type-4 is similar to an orthogonal time frequency space (Orthogonal Time Frequency Space, OTFS) method. $N_f^{(4)}$ is a sub-channel frequency domain resource length in a frequency domain direction, and $N_t^{(4)}$ is a number of sub-channel time domain resource units in a time domain direction, as shown in FIG. 6d.

It should be noted that, SC Type-1, SC Type-2, SC Type-3, and SC Type-4 use different spread spectrum methods, but waveforms (Waveform) thereof all belong to OFDM. Different types of sub-channels have different advantages and disadvantages for sensing channels, and therefore, a proper and effective sub-channel type may be selected based on specific sensing channel conditions and service requirements.

If a sub-channel is used to transmit data, and a valid payload (namely, a transport block (Transport Block, TB)) is constant, a number of RBs occupied by each sub-channel is:

$$N_f^{(1)} \times 1 = N_f^{(2)} \times 1 = 1 \times N_t^{(3)} = N_f^{(4)} \times N_t^{(4)}$$

It should be noted that, whether to use SC Type-1, SC Type-2, SC Type-3, and SC Type-4 may be determined based on a configuration of RRC and/or real-time channel information and through medium access control (Medium Access Control, MAC) scheduling. Each sub-channel type may be used alone or in combination with each other.

Embodiment 2: Sensing signal design

In a process of sensing measurement, transmission of a sub-channel may be completed by using a sensing signal (Sensing Signal, SS). Based on different sub-channel characteristics, a related sensing signal is effectively designed. To facilitate understanding, in description of the sensing signal design, a single antenna scenario is used as an example. For a scenario of M OFDM-MIMO antenna ports, this sensing signal design may be simply extended.

A sensing measurement quantity is related to a sensing service, and different services require different measurement quantities. For example, the measurement quantity includes a maximum measurement distance (or delay), a maximum Doppler frequency shift (speed), a granularity of distance, a granularity of Doppler frequency shift (speed), and the like. The key to realize a measurement quantity required by sensing is how to allocate radio resources effectively.

Based on a resource parameter of the sensing signal, the maximum delay $\tau_{\max}$ and the maximum Doppler shift $f_{D,\max}$ may be respectively defined as:

$$\tau_{\max} \leq \frac{1}{N_f \Delta f}$$

and

$$f_{D,\max} \leq \frac{1}{2N_t T}$$

, where

$\Delta f$ is an OFDM subcarrier interval, $T$ is a length of OFDM symbol duration with a cyclic prefix (Cyclic Prefix, CP), and $N_f$ and $N_t$ are quantities of intervals of reference signals in frequency domain (subcarrier) and time domain (OFDM symbol) respectively. To be specific, when the above parameters are fixed, that is, the sensing signal resource is determined, the maximum delay and the maximum Doppler shift that can be sensed are also limited.

In addition, a distance (or delay) granularity $\Delta$ depends on a signal bandwidth, that is,

$$\Delta R = \frac{c}{2N_c \Delta f}$$

, where

$N_c$ is a number of subcarriers in an OFDM symbol.

A speed (or Doppler shift) granularity $\Delta v$ may be defined as:

$$\Delta v = \frac{1}{T_r N_r}$$

, where

$T_r$ is an OFDM symbol repetition cycle, and $N_r$ is a number of OFDM symbol repetition cycles.

Therefore, the maximum delay $\tau_{\max}$ and the maximum Doppler shift $f_{D,\max}$ may be provided to reduce intervals between reference signals in frequency domain and time domain, that is, reduce $N_f$ and $N_t$, where a minimum value of $N_f$ and $N_t$ is 1.

In addition, to improve the distance granularity $\Delta$, the number $N_c$ of subcarriers in the OFDM symbol may be increased.

To improve the speed granularity $\Delta v$, the OFDM symbol repetition cycle $T_r$ and/or the number $N_r$ of OFDM symbol repetition cycles may be increased.

It should be noted that, improving the distance granularity and the speed granularity may improve accuracy of sensing a multi-path signal, and more multi-path signals may be sensed more effectively.

In this embodiment of this application, the sensing resource may be adjusted based on the maximum delay and the maximum Doppler shift of the sensing channel, that is, according to specific sensing requirements and/or an actual situation of the sensing channel of $\tau_{max}$ and $f_{D,max}$, the sensing resource is adjusted by adjusting intervals of reference signals in frequency domain and time domain.

It can be understood that the size of the sensing resource may be adjusted based on a required delay (or distance) granularity and Doppler shift (or speed) granularity, or a number and/or accuracy of multi-path signals required to be sensed. Specifically, a sensing delay (or distance) granularity may be controlled by adjusting the number $N_c$ of subcarriers in the OFDM symbol. Similarly, a sensing Doppler shift (or speed) granularity may be controlled by adjusting the OFDM symbol repetition cycle $T_r$ and/or the number $N_r$ of OFDM symbol repetition cycles. Similarly, the number and/or accuracy of multi-path signals required to be sensed may be controlled by adjusting at least one of parameters $N_c$, $T_r$ and $N_r$.

Optionally, sensing signals may be designed based on different sub-channel (Sub-channel, SC) characteristics, and a specific design method is as follows.

(1) Design of a sensing signal of SC Type-1.

The sensing signal of SC Type-1 occupies only OFDM resources in a frequency domain direction, and a size of the occupied resources may be determined based on a maximum value of delay in delay domain. When the maximum value of delay is large, the sensing signal may occupy all OFDM resources in the frequency domain direction, that is, a full resource (Full Resource), $\Delta_f = 1$, $N_f^{(1)} = 8$, as shown in FIG. 7a. When the maximum value of the sensed delay is small, the sensing signal may occupy a part of the OFDM resources in the frequency domain direction, that is, a partial resource (Partial Resource), $\Delta_f = 2$ or $\Delta_f = 4$. A sensing signal parameter $\Delta_f$ is an interval between two adjacent frequency domain resources.

It can be understood that an effect of adjusting from the full resource to the partial resource is equivalent to down-sampling (that is, Down-sampling) a radio channel.

The SC Type-1-related sensing signal may be expressed as $R_{SC1}\left(N_f^{(1)}, \Delta_f\right)$.

It can be understood that at a sensing transmit end, related series of signals may be set in advance for transmission by using an SC Type-1-related sensing resource, and at a sensing receive end, the same series of signals may be used for channel prediction by using the SC Type-1-related sensing resource.

It can be understood that the SC Type-1-related sensing signal can sense a position and orientation measurement quantity of a measured object.

(2) Design of a sensing signal of SC Type-2.

The design of the SC Type-2-related sensing signal may be completed through Zadoff-Chu (ZC), a spreading sequence (Spreading Sequence), or a DFT-based spreading sequence.

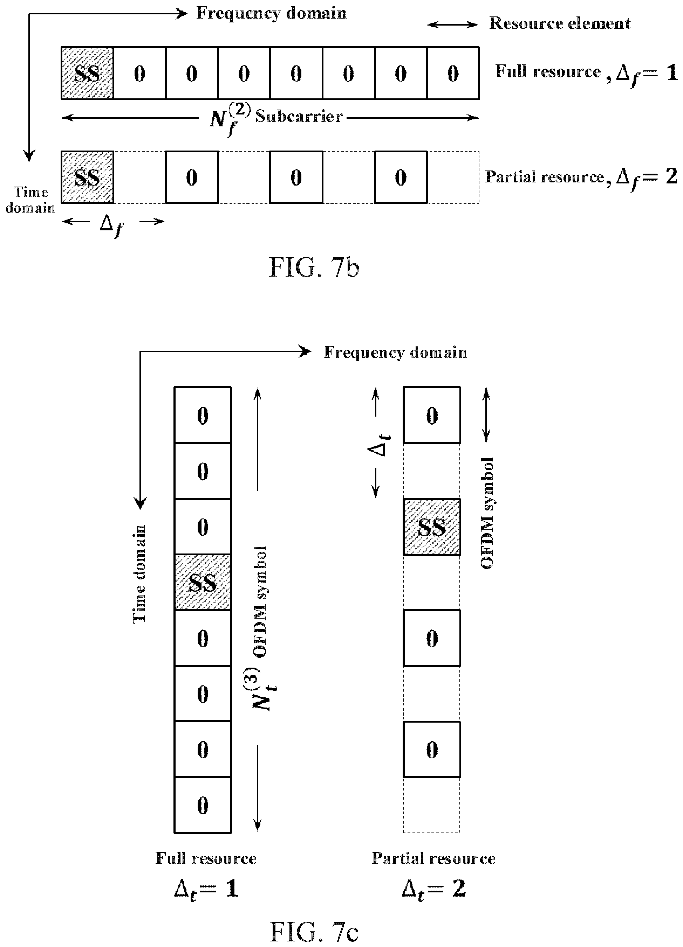

As shown in FIG. 7b, the SC Type-2-related sensing signal may be set in a frequency domain direction. Specifically, the sensing signal is formed through spreading by using ZC series, where $m = 0$ is a single antenna scenario. Similarly, the sensing signal may determine a size of occupied resources based on a maximum value of delay in delay domain. When the maximum value of delay is large, the sensing signal may occupy all OFDM resources in the frequency domain direction, that is, a full resource, $\Delta_f = 1$, $N_f^{(2)} = 8$, as shown in FIG. 7b. When the maximum value of the sensed delay is small, the sensing signal may occupy a part of the OFDM resources in the frequency domain direction, that is, a partial resource (Partial Resource), $\Delta_f = 2$ or $\Delta_f = 4$. A sensing signal parameter $\Delta_f$ is an interval between two adjacent frequency domain resources.

It can be understood that an effect of adjusting from the full resource (Full Resource) to the partial resource is equivalent to down-sampling (Down-sampling) a radio channel.

The sensing signal of SC Type-2 may be expressed as $R_{SC2}\left(N_f^{(2)}, \Delta_f\right)$.

It can be understood that the sensing signal of SC Type-2 can sense a position and orientation measurement quantity of a measured object.

(3) Design of a sensing signal of SC Type-3.

The design of the sensing signal of SC Type-3 is basically the same as that of the sensing signal of SC Type-2, and may be completed through Zadoff-Chu (ZC), a spreading sequence (Spreading Sequence), or a DFT-based spreading sequence. But the difference is that the former is a sensing signal for a frequency domain, while the latter is a sensing signal for a time domain.

As shown in FIG. 7c, the sensing signal of SC Type-3 may be set in a time domain direction. Specifically, the sensing signal is formed through spreading by using ZC series, where m = 0 is a single antenna scenario. Similarly, the sensing signal may determine a size of occupied resources based on a maximum value of Doppler frequency shift in Doppler domain. When the maximum value of Doppler frequency shift is large, the sensing signal may occupy all OFDM resources in the time domain direction, that is, a full resource, $\Delta_t$= 1, $N_t^{(3)} = 8$, as shown in FIG. 7c. When the maximum value of the sensed Doppler frequency shift is small, the sensing signal may occupy a part of the OFDM resources in the time domain direction, that is, a partial resource, $\Delta_t$= 2 or $\Delta_t$= 4. A sensing signal parameter $\Delta_t$ is an interval between two adjacent time domain resources.

It can be understood that an effect of adjusting from the full resource to the partial resource is equivalent to down-sampling (Down-sampling) a radio channel.

The SC Type-3-related sensing signal may be expressed as $R_{SC3}\left(N_t^{(3)}, \Delta_t\right)$.

It can be understood that the SC Type-3-related sensing signal can sense a Doppler measurement quantity and the like of a measured object.

(4) Design of a sensing signal of SC Type-4.

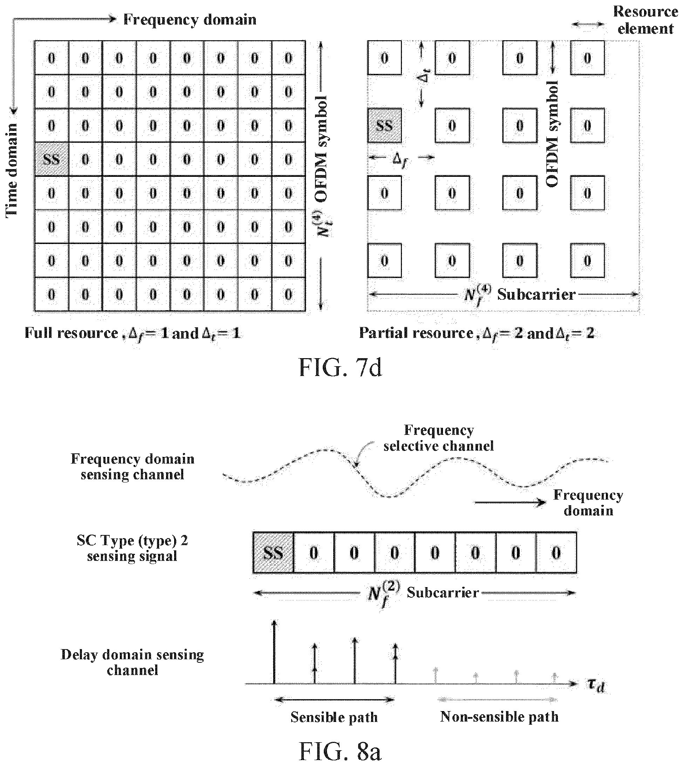

The design of the sensing signal of SC Type-4 may imitate DM-RS design in OTFS. As shown in FIG. 7d, the sensing signal is designed by reserving some resource elements. The sensing signal is specific to one antenna port. If there are M antenna ports, M orthogonal partial resource elements need to be reserved.

Similarly, the sensing signal may determine a size of occupied resources based on a maximum value of delay in delay domain and a maximum value of Doppler frequency shift in Doppler domain. When both the maximum value of delay and the maximum value of Doppler frequency shift are large, the sensing signal may occupy all OFDM resources in the frequency domain direction and the time domain direction, that is, a full resource, $\Delta_f$= 1 and $\Delta_t$= 1, $N_f^{(4)} = 8$, $N_t^{(4)} = 8$, as shown in FIG. 7d. When the maximum value of the sensed delay and the maximum value of the sensed Doppler frequency shift are small, the sensing signal may occupy a part of the OFDM resources in the frequency domain direction and the time domain direction, that is, a partial resource (Partial Resource), $\Delta_f$=2 and $\Delta_t$= 2, or $\Delta_f$= 4 and $\Delta_t$= 4. It is certain that resource-related parameters of $\Delta_f$ and $\Delta_t$ in the time-frequency domain and time domain direction may be completed by selecting any combination based on the maximum value of delay and the maximum value of Doppler frequency shift. A sensing signal parameter $\Delta_f$ is an interval between two adjacent frequency domain resources, and a sensing signal parameter $\Delta_t$ is an interval between two adjacent time domain resources.

It can be understood that an effect of adjusting from the full resource to the partial resource is equivalent to down-sampling (that is, Down-sampling) a radio channel.

Optionally, the sensing signal of SC Type-4 may be expressed as $R_{SC4}\left(N_f^{(4)}, N_t^{(4)}, \Delta_f, \Delta_t\right)$.

It can be understood that the sensing signal of SC Type-4 can sense a position and orientation measurement quantity, and a Doppler frequency measurement quantity of a measured object.

Embodiment 3: Sensing signal design by using an NR existing reference signal.

NR has a very flexible reference signal design. Therefore, in addition to the above sensing signal design, during implementation of integrated sensing and communication, design of sensing signals for SC-Type-1, SC-Type-2, SC-Type-3, and SC-Type-4 may also be realized by using existing reference signals in NR. Specifically, because NR has a flexible configuration of reference signal, required sensing signals may be realized through different RRC configurations.

In this case, SC-Type-1 and SC-Type-2 may be one type. It may be realized by using PDSCH-DM-RS or PDCCH-DM-RS through different RRC configuration methods.

If a corresponding large maximum delay needs to be sensed, a configuration method of dmrs.DMRSConfigurationType=1 may be used to realize sensing signals in the full resource.

If a corresponding small maximum delay needs to be sensed, PDCCH DM-RS may be used to realize sensing signals in the partial resource.

Realizing sensing signals of SC-Type-1 and SC-Type-2 by using the existing reference signals in NR can greatly reduce complexity of standardization and effectively integrate with data communication.

It can be understood that a configuration of DM-RS should meet two service requirements of communication and sensing if transmission of integrated sensing and communication is implemented.

Similarly, the SC-Type-3 sensing signal may be realized through an RRC configuration method for a reference signal. Specifically, the sensing signal may use PT-RS, and an effective RRC configuration is performed on a PT-RS parameter. For example, a PT-RS reference signal in a PDSCH or PUSCH configuration (before any orthogonal sequence is applied) is repeated every $L_{PT-RS}$ OFDM symbols, and starts from a 1st OFDM symbol. Therefore, if a maximum Doppler frequency is high, a full resource sensing signal may be realized by setting $L_{PT-RS}$ = 1. Similarly, if a maximum Doppler frequency is low, a partial resource sensing signal may be realized by setting $L_{PT-RS}$ = 4.

It can be understood that in NR, $L_{PT-RS}$ is determined based on a level of MCS, and $L_{PT-RS}$ may be set to 1, 2, or 4.

Realizing the SC-Type-3 sensing signal by using the existing reference signals in NR can greatly reduce complexity of standardization and effectively integrate with data communication.

It can be understood that a configuration of PT-RS should meet two service requirements of communication and sensing if transmission of integrated sensing and communication is implemented.

Similarly, the SC-Type-4 sensing signal may be realized through an RRC configuration method for a reference signal. Specifically, the sensing signal may be realized by using a DM-RS reference signal through an RRC configuration. A density of sensing signal resources in a time domain direction may be adjusted by using a parameter dmrs.DMRSAdditionalPosition. For example, when the maximum Doppler frequency is high, dmrs.DMRSAdditionalPosition may be configured to be equal to 3 to improve a density of sensing signals in a time domain direction. On the contrary, when the maximum Doppler frequency is low, dmrs.DMRSAdditionalPosition may be configured to be equal to 0 to reduce the density of sensing signals in the time domain direction.

Similarly, the SC-Type-4 sensing signal may be realized through a configuration of TRS. TRS is a resource set including a plurality of periodic non-zero-power (non-zero-power, NZP)-CSI-RSs. A common configuration is to transmit every 10, 20, 40, or 80 milliseconds. Therefore, TRS is not as flexible as DM-RS, and can be used only in a delay and Doppler frequency scenario with low sensing.

It can be understood that the use of TPS reference signal is due to an oscillator frequency offset, which causes the device to be out of synchronization with the network. Therefore, a configuration of TRS should meet two service requirements of communication and sensing if transmission of integrated sensing and communication is implemented.

In addition, there are many types of existing reference signals in NR, as shown in Table 2, each type is designed for different services, scenarios, and the like. Examples in this embodiment are only a part of reference signals in Table 2. However, the embodiments in this application can be extended to any scenario and any requirement.

Specifically, there are two cases when existing reference signals in NR are used to implement design of sensing signals for SC-Type-1, SC-Type-2, SC-Type-3, and SC-Type-4.

In a first case, a configured reference signal is for only a sensing base station and/or terminal. In this case, a sensing signal informs, through layer 1 (Layer 1, L1) signaling, or medium access control (Medium Access Control, MAC) -control element (Control Element, CE) signaling, or RRC signaling, a terminal of accurately using the configured reference signal.

In a second case, a configured reference signal is for communication and a sensing base station and/or terminal. In this case, used as a sensing signal, the reference signal informs, through L1 signaling, MAC-CE signaling, or RRC signaling, UE of accurately using the configured reference signal. In addition, as a reference signal for data communication, the reference signal also needs to inform, through L1 signaling, MAC-CE signaling, or RRC signaling, the UE end of characteristics and specific usage information of the configured reference signal.

For example, the SC-Type-3 sensing signal may be realized by configuring a PT-RS reference signal. However, in NR data communication, a density of PT-RS is determined based on a level of modulation and coding scheme (Modulation and Coding Scheme, MCS). When a $L_{PT-RS}$ value for MCS does not match a density of a set sensing signal, there may be problems in demodulation of data communication. Therefore, for integrated sensing and communication, signaling interaction related to a reference signal is indispensable.

Embodiment 4: Sensing method.

A simplest and most effective way to sense a time domain (position, orientation, and the like) and a frequency domain (Doppler frequency and the like) is to sense a corresponding channel through the sensing signal of SC Type-4 (for example, a full resource, $\Delta_f$ = 1 and $\Delta_t$ = 1), to obtain related channel information in delay domain and Doppler domain (that is, a position, an orientation, and a moving speed of a measured object). An advantage of this method is to quickly obtain a required measurement quantity, but at the cost of using a lot of OFDM channel resources.

To meet a requirement of a required measurement quantity and minimize overheads of sensing resources, specific steps are as follows.

Step 1: Sense channels in frequency domain and delay domain by using sensing signals of SC Type-1 or SC Type-2.

In a case that the maximum value of the delay domain is unknown, in addition to SC Type-1 or SC Type-2, a full resource is selected, that is, $\Delta_f= 1$. When a delay in delay domain is less than a current maximum value of a sensed delay domain, overheads of radio resources can be effectively reduced by adjusting the parameter $\Delta_f$.

Step 2: Sense channels in Doppler domain by using the sensing signal of SC Type-3.

In a case that the maximum value of the Doppler domain is unknown, in addition to SC Type-3, a full resource is selected, that is, $\Delta_t= 1$. When a Doppler domain is less than a current maximum value of a sensed Doppler domain, overheads of radio resources can be effectively reduced by adjusting the parameter $\Delta_t$.

Step 3: Select, based on the sensing results in Step 2 and/or Step 3, an optimal sensing sub-channel type (such as SC Type-4) and a corresponding resource size, to simultaneously sense a time domain and a frequency domain.

Specifically, based on the sensing results in Step 1 and Step 2, the base station and/or terminal may first predict the delay domain and/or the Doppler domain, and obtain a maximum value of each domain. Once obtaining the maximum value of the delay domain and/or the Doppler domain, the base station and/or terminal may effectively adjust a size of a sensing resource based on a maximum channel sensing demand of each domain and a corresponding granularity by selecting (reselecting) the sensing signal of SC Type-4.

It can be understood that an execution sequence between Step 1 and Step 2 may be interchanged, that is, Step 2 is performed first, and then Step 1 is performed.

It can be understood that Step 1 to Step 3 may be performed in periodic and aperiodic methods. Step 1 to Step 3 may also be triggered based on a variation of the channel, to adaptively update radio resources required for communication and sensing, and optimize the radio resources.

Embodiment 5

A physical discrete path model in delay and Doppler domain may be simplified as:

$$C(v, \tau) = \sum_{n=1}^{N_p} \beta_n e^{\phi_n} \delta(\tau - \tau_n) \delta(v - v_n)$$

When a number of objects reflected is constant, a number of physical discrete paths in time-frequency domain and a number of physical discrete paths in delay-Doppler domain are constant, that is, $N_p$ in the formula is constant. As a result, a number of physical discrete paths sensed in delay domain and a number of physical discrete paths sensed in Doppler domain are the same. However, due to limitation of a sensed resolution or granularity, some discrete paths may overlap, which leads to a difference between the number of physical discrete paths sensed in the delay domain and the number of physical discrete paths sensed in the Doppler domain.

Considering the characteristic of limitation of the sensed resolution or granularity, this embodiment describes how to effectively sense the physical discrete channels in delay domain and Doppler domain by using SC Type-1, SC Type-2, SC Type-3, and SC Type-4.

Corresponding to Step 1 in Embodiment 4, as shown in FIG. 8a, a frequency domain sensing channel has a characteristic of frequency selective channel (Frequency Selective Channel). In a sensing process, because a maximum delay value is unknown, the sensing signal of SC Type-2 may select a full resource mode, that is, sensing signal parameters are $N_f^{(2)} = 8$ and $\Delta_f= 1$. Through IFFT transform, a delay domain sensing channel can be obtained. In this example, the sensing signal of SC Type-2 with the full resource can sense 10 paths, in which 4 distant paths are weak, which is of little significance for measurement of integrated sensing and communication. 4 distant paths herein are considered as non-sensible paths.

In addition, 6 close paths can be sensed, but 2 pairs of paths overlap each other, so the 6 close paths can be sensed as only 4 paths. 6 close paths herein are considered as sensible paths.

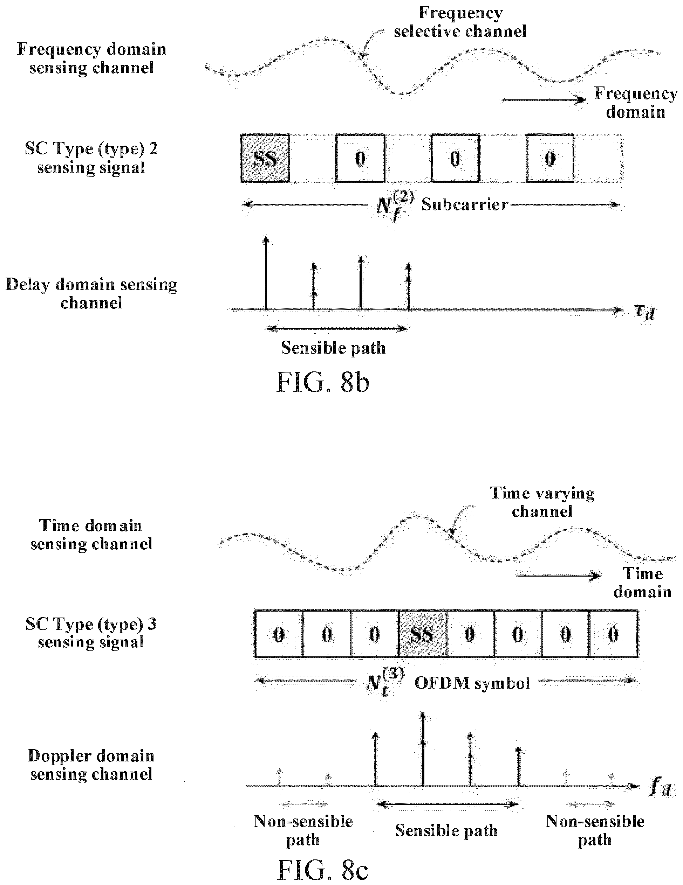

Considering that the sensed path should be valuable for measurement of integrated sensing and communication, the non-sensible path may be ignored. Therefore, a sensing channel in a frequency domain direction may reselect the sensing signal of SC Type-2 with a partial resource, that is, sensing signal parameters are $N_f^{(2)} = 8$ and $\Delta_f$= 2. As shown in FIG. 8b, parameters of the sensing signal in frequency domain and delay domain can be reduced by half.

Corresponding to Step 2 in Embodiment 4, similarly, as shown in FIG. 8c, a time domain sensing channel has a characteristic of a time varying channel (Time Varying Channel). In a sensing process, because a maximum Doppler value is unknown, the sensing signal of SC Type-3 may select a full resource mode, that is, sensing signal parameters are $N_t^{(3)} = 8$ and $\Delta_t$= 1. Through FFT transform, a Doppler domain sensing channel can be obtained. In this example, the sensing signal of SC Type-3 with the full resource can sense 10 paths, in which 4 large Doppler paths are weak, which is of little significance for measurement of integrated sensing and communication. 4 large Doppler paths herein are considered as non-sensible paths.

In addition, 6 small Doppler paths can be sensed, but 2 pairs of paths overlap each other, so the 6 small Doppler paths can be sensed as only 4 paths. 6 small Doppler paths herein are considered as sensible paths.

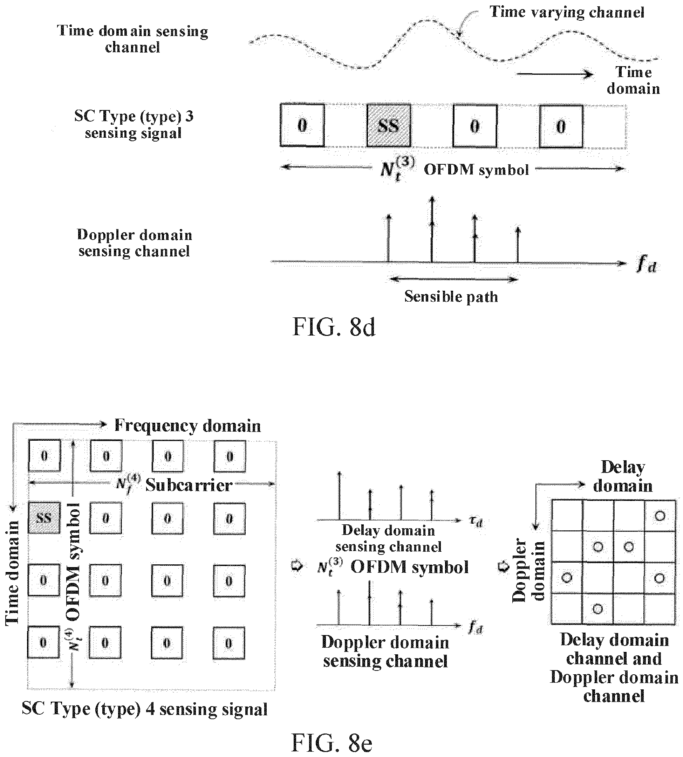

Similarly, considering that the sensed path should be valuable for measurement of integrated sensing and communication, the non-sensible path may be ignored. Therefore, a sensing channel in a time domain direction may reselect the sensing signal of SC Type-3 with a partial resource, that is, sensing signal parameters are $N_t^{(3)}=8$ and $\Delta_t$= 2. As shown in FIG. 8d, parameters of the sensing signal in time domain and Doppler domain can be reduced by half.

It can be understood that a Doppler frequency of each path has no relationship with sensed channel strength, that is, channel strength of a path with a large Doppler frequency may be strong or weak, and vice versa. However, a path with weak channel strength in delay domain should also have weak channel strength in Doppler domain, and vice versa.

Corresponding to Step 3, a sensible path cannot be completely distinguished by using only the sensing signal of SC Type-2 and/or SC Type-3, and a complete sensing channel in delay domain and Doppler domain can be obtained by using the sensing signal of SC Type-4. Therefore, as shown in FIG. 8e, the sensing signal of SC Type-4 with a partial resource is selected, that is, with channel parameters $N_f^{(4)} = 8$ and $\Delta_f$= 2, and $N_t^{(4)} = 8$ and $\Delta_t$= 2. It can be seen that an overlapping sensing path may be distinguished by obtaining a complete sensing channel in delay domain and Doppler domain by using the sensing signal of SC Type-4.

Compared with a sensing signal of SC Type-4 with full resource, radio resources required for a sensing signal of SC Type-4 with partial resource are reduced by 4 times.

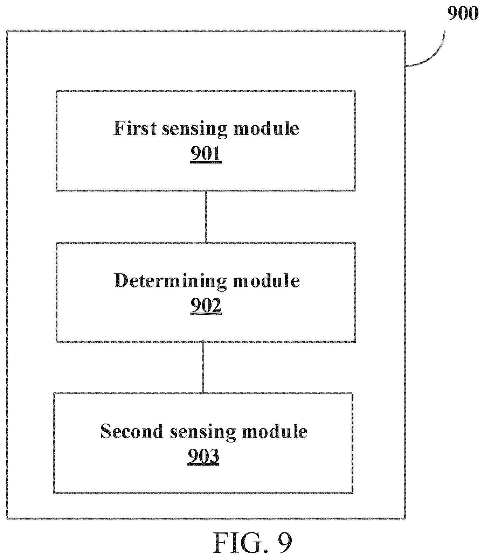

Referring to FIG. 9, an embodiment of this application provides a sensing apparatus, applied to a first network element, and the apparatus 900 includes:

a first sensing module 901, configured to: sense a frequency domain channel to obtain a first sensing result related to a delay domain, and sense a time domain channel to obtain a second sensing result related to a Doppler domain;
a determining module 902, configured to determine a target sensing signal and a corresponding target time-frequency domain resource based on the first sensing result and/or the second sensing result; and
a second sensing module 903, configured to sense a channel time domain and a channel frequency domain based on the target sensing signal and the target time-frequency domain resource.

In an implementation of this application, optionally, the determining module 902 is further configured to:

predict a delay domain channel and/or a Doppler domain channel based on the first sensing result and/or the second sensing result, to obtain a maximum value of a target channel;
determine the target sensing signal based on the maximum value of the target channel; and
determine, based on a sensing demand and/or an actual situation of a sensing channel, the time-frequency domain resource corresponding to the target sensing signal, where
the target channel includes at least one of a delay domain channel and a Doppler domain channel.

In an implementation of this application, optionally, the sensing demand may include at least one of the following:

(1) a maximum value of the target channel;
(2) a number of sensed multi-path signals;
(3) a maximum delay of a sensed multi-path signal;
(4) a maximum Doppler shift of the sensed multi-path signal;
(5) a granularity of a sensing measurement quantity; and
(6) accuracy of a sensing measurement quantity.

In an implementation of this application, optionally, the first sensing module 901 is further configured to:

sense, based on first information, the frequency domain channel to obtain the first sensing result related to the delay domain, and sense the time domain channel to obtain the second sensing result related to the Doppler domain, where the first information includes one of the following:

(1) a periodic parameter;
(2) an aperiodic parameter; and
(3) channel variation information.

In an implementation of this application, optionally, the first sensing module 901 is further configured to:

sense the frequency domain channel based on a second sensing signal and a corresponding frequency domain resource to obtain the first sensing result related to the delay domain; and
sense the time domain channel based on a third sensing signal and a corresponding time domain resource to obtain the second sensing result related to the Doppler domain.

In an implementation of this application, optionally, the apparatus further includes:

a first adjusting module, configured to adjust, based on a first parameter, a size of the frequency domain resource corresponding to the second sensing signal, where
the first parameter represents an interval between two adjacent frequency domain resources.

In an implementation of this application, optionally, the second sensing signal includes sensing signals of SC Type-1 and/or SC Type-2, and in a case that a value of the first parameter is 1, the frequency domain resource corresponding to the second sensing signal includes all resources of SC Type-1 and/or SC Type-2; or in a case that the value of the first parameter is greater than 1, the frequency domain resource corresponding to the second sensing signal includes a part of the resources of SC Type-1 and/or SC Type-2.

In an implementation of this application, optionally, the first adjusting module is further configured to:

in a case that a maximum value of the delay domain is unable to be determined, determine, based on the first parameter, that the frequency domain resource corresponding to the second sensing signal includes all resources of SC Type-1 and/or SC Type-2, where a value of the first parameter is 1; or
in a case that a delay of the delay domain in the first sensing result is less than the maximum value of the delay domain, reduce the size of the frequency domain resource corresponding to the second sensing signal by adjusting the first parameter.

In an implementation of this application, optionally, SC Type-1 includes a pure OFDM-based sub-channel; and/or
a sensing signal of SC Type-1 is determined based on at least one of a sub-channel frequency domain resource length in a frequency domain direction and the interval between two adjacent frequency domain resources.

In an implementation of this application, optionally, SC Type-2 includes a frequency domain spread sequence sub-channel; and/or
a sensing signal of SC Type-2 is determined based on at least one of a sub-channel frequency domain resource length in a frequency domain direction and the interval between two adjacent frequency domain resources.

In an implementation of this application, optionally, the apparatus further includes:

a second adjusting module, configured to adjust, based on a second parameter, a size of the time domain resource corresponding to the third sensing signal, where
the second parameter represents an interval between two adjacent time domain resources.

In an implementation of this application, optionally, the third sensing signal includes a sensing signal of SC Type-3, and in a case that a value of the second parameter is 1, the time domain resource corresponding to the third sensing signal includes all resources of SC Type-3; or in a case that the value of the second parameter is greater than 1, the time domain resource corresponding to the third sensing signal includes a part of the resources of SC Type-3.

In an implementation of this application, optionally, the second adjusting module is further configured to:

in a case that a maximum value of the Doppler domain is unable to be determined, determine, based on the second parameter, that the time domain resource corresponding to the third sensing signal includes all resources of SC Type-3, where a value of the second parameter is 1;

or

in a case that the Doppler domain in the second sensing result is less than the maximum value of the Doppler domain, reduce the size of the time domain resource corresponding to the third sensing signal by adjusting the second parameter.

In an implementation of this application, optionally, SC Type-3 includes a time domain-based spread sequence sub-channel;

and/or

a sensing signal of SC Type-3 is determined based on at least one of a sub-channel time domain resource length in a time domain direction and the interval between two adjacent time domain resources.

In an implementation of this application, optionally, the apparatus further includes:

a third adjusting module, configured to adjust, based on a third parameter and a fourth parameter, a size of the time-frequency domain resource corresponding to the target sensing signal, where

the third parameter represents an interval between two adjacent frequency domain resources, and the fourth parameter represents an interval between two adjacent time domain resources.

In an implementation of this application, optionally, the target sensing signal includes a sensing signal of SC Type-4, and in a case that a value of the third parameter is 1, and a value of the fourth parameter is 1, the time-frequency domain resource corresponding to the target sensing signal includes all resources of SC Type-4; or

in a case that the value of at least one of the third parameter and the fourth parameter is greater than 1, the time-frequency domain resource corresponding to the target sensing signal includes a part of the resources of SC Type-4.

In an implementation of this application, optionally, SC Type-4 includes a time-frequency domain-based spread sequence sub-channel;

and/or

a sensing signal of SC Type-4 is determined based on at least one of a sub-channel frequency domain resource length in a frequency domain direction, a sub-channel time domain resource length in a time domain direction, the interval between two adjacent frequency domain resources, and the interval between two adjacent time domain resources.

In an implementation of this application, optionally, at least one of the sensing signal of SC Type-1, the sensing signal of SC Type-2, the sensing signal of SC Type-3, and the sensing signal of SC Type-4 is determined based on an RRC configuration.

The apparatus provided in this embodiment of this application can implement the processes implemented in the method embodiment of FIG. 5 and achieve a same technical effect. To avoid repetition, details are not described herein again.

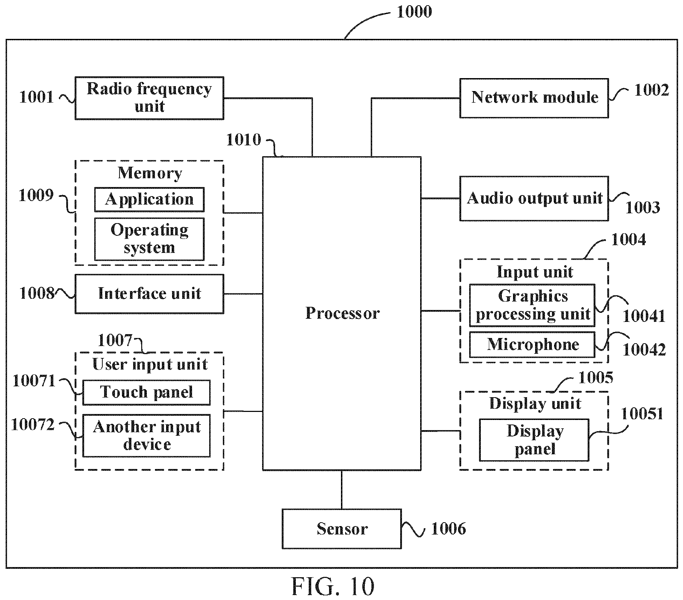

FIG. 10 is a schematic diagram of a hardware structure of a terminal according to an embodiment of this application. The terminal 1000 includes but is not limited to: at least some of the following components: a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) that supplies power to each component. The power supply may be logically connected to the processor 1010 through a power management system, to implement functions such as charging and discharging management, and power consumption management by using the power management system. The terminal structure shown in FIG. 10 constitutes no limitation on the terminal, and the terminal may include more or fewer components than those shown in the figure, or combine some components, or have different component arrangements. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein again.

In this embodiment of this application, after receiving downlink data from a network device, the radio frequency unit 1001 may transmit the downlink data to the processor 1010 for processing. In addition, the radio frequency unit 1001 may send uplink data to the network device. Generally, the radio frequency unit 1001 includes but is not limited to an antenna, an amplifier, a transceiver, a coupler, a low noise amplifier, a duplexer, and the like.

The memory 1009 may be configured to store a software program or instructions and various data. The memory 1009 may mainly include a first storage area for storing a program or instructions and a second storage area for storing data. The first storage area may store an operating system, and an application or instructions required by at least one function (for example, a sound playing function or an image playing function). In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any memory of another proper type.

The processor 1010 may include one or more processing units. Optionally, an application processor and a modem processor are integrated into the processor 1010. The application processor mainly processes an operating system, a user interface, an application, or the like. The modem processor mainly processes a wireless communication signal, for example, a baseband processor. It can be understood that the foregoing modem processor may not be integrated into the processor 1010.

The terminal provided in the embodiment of this application can implement the various processes implemented in the method embodiment in FIG. 5 and achieve a same technical effect. To avoid repetition, details are not described herein again.

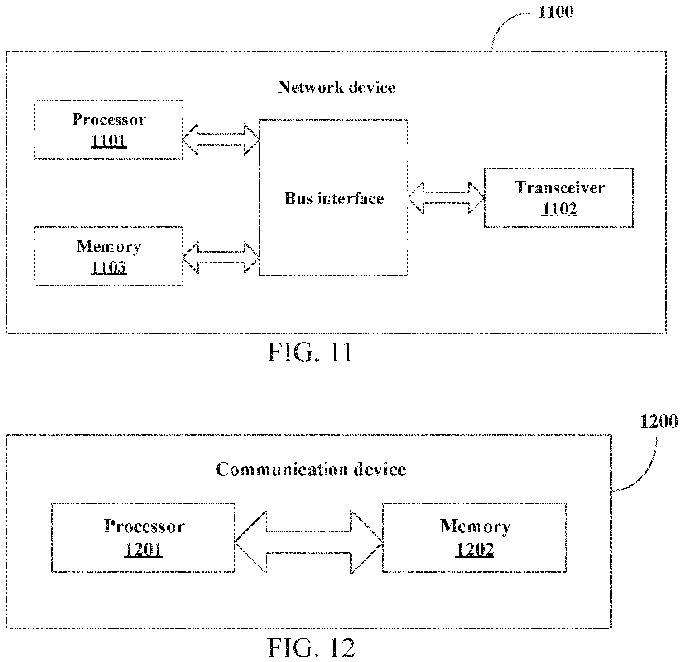

Referring to FIG. 11, FIG. 11 is a structural diagram of a communication device according to an embodiment of this application. As shown in FIG. 11, a communication device 1100 includes: a processor 1101, a transceiver 1102, a memory 1103, and a bus interface, where the processor 1101 may be responsible for bus architecture management and general processing. The memory 1103 may store data used by the processor 1101 when the processor performs an operation.

In an embodiment of this application, the communication device 1100 further includes: a program that is stored in the memory 1103 and that can be run on the processor 1101. When the program is executed by the processor 1101, steps of the foregoing method in FIG. 5 are implemented.

In FIG. 11, a bus architecture may include any quantity of interconnected buses and bridges, which are specifically linked together by various circuits of one or more processors represented by the processor 1101 and a memory represented by the memory 1103. The bus architecture may further link various other circuits together such as a peripheral device, a voltage regulator, and a power management circuit. These are all well-known in the art, and therefore are not further described in this specification. The bus interface provides an interface. The transceiver 1102 may be a plurality of elements, in other words, includes a transmitter and a receiver, and provides a unit configured to communicate with various other apparatuses on a transmission medium.

Optionally, as shown in FIG. 12, an embodiment of this application further provides a communication device 1200, including a processor 1201 and a memory 1202. The memory 1202 stores a program or instructions that can be carried out on the processor 1201. For example, when the communication device 1200 is a terminal, the program or the instructions are executed by the processor 1201 to implement the steps of the foregoing method embodiment in FIG. 5. When the communication device 1200 is a network device, the program or the instructions are executed by the processor 1201 to implement the steps of the foregoing method embodiment in FIG. 5, and a same technical effect can be achieved. To avoid repetition, details are not described herein again.

An embodiment of this application further provides a readable storage medium. The readable storage medium stores a program or instructions, and when the program or the instructions are executed by a processor, the processes in FIG. 5 and the foregoing method embodiments are implemented, and a same technical effect can be achieved. To avoid repetition, details are not described herein again.

The processor is a processor in the terminal in the foregoing embodiment. The readable storage medium may be non-volatile or non-transitory. The readable storage medium may include a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes in FIG. 5 and the foregoing method embodiments, and a same technical effect can be achieved. To avoid repetition, details are not described herein again.

It should be understood that the chip mentioned in this embodiment of this application may alternatively be referred to as a system-level chip, a system chip, a chip system, or an on-chip system chip.

An embodiment of this application further provides a computer program/program product. The computer program/program product is stored in a storage medium, the computer program/program product is executed by at least one processor to implement the processes in FIG. 5 and the foregoing method embodiments, and a same technical effect can be achieved. To avoid repetition, details are not described herein again.

An embodiment of this application further provides a communication system, where the communication system includes a terminal and a network device. The terminal is configured to perform the processes in FIG. 5 and the foregoing method embodiments, the network device is configured to perform the processes in FIG. 5 and the foregoing method embodiments, and a same technical effect can be achieved. To avoid repetition, details are not described herein again.

It should be noted that, in this specification, the term "include", "comprise", or any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. A sensing method, comprising:

    sensing, by a first network element, a frequency domain channel to obtain a first sensing result related to a delay domain, and/or sensing a time domain channel to obtain a second sensing result related to a Doppler domain;
    determining, by the first network element, a target sensing signal and a corresponding target time-frequency domain resource based on the first sensing result and/or the second sensing result; and
    sensing, by the first network element, a channel time domain and a channel frequency domain based on the target sensing signal and the corresponding target time-frequency domain resource.

2. The method according to claim 1, wherein the determining, by the first network element, a target sensing signal and a corresponding target time-frequency domain resource based on the first sensing result and/or the second sensing result comprises:

    predicting, by the first network element, a delay domain channel and/or a Doppler domain channel based on the first sensing result and/or the second sensing result, to obtain a maximum value of a target channel;
    determining, by the first network element, the target sensing signal based on the maximum value of the target channel; and
    determining, by the first network element based on a sensing demand and/or an actual situation of a sensing channel, the time-frequency domain resource corresponding to the target sensing signal, wherein

the target channel comprises at least one of the delay domain channel and the Doppler domain channel.

3. The method according to claim 2, wherein the sensing demand comprises at least one of the following:

the maximum value of the target channel;
a number of sensed multi-path signals;
a maximum delay of a sensed multi-path signal;
a maximum Doppler shift of the sensed multi-path signal;
a granularity of a sensing measurement quantity; and
accuracy of a sensing measurement quantity.

4. The method according to claim 1, wherein the sensing, by a first network element, a frequency domain channel to obtain a first sensing result related to a delay domain, and sensing a time domain channel to obtain a second sensing result related to a Doppler domain comprises:

sensing, by the first network element based on first information, the frequency domain channel to obtain the first sensing result related to the delay domain, and sensing the time domain channel to obtain the second sensing result related to the Doppler domain, wherein
the first information comprises one of the following:

a periodic parameter;
an aperiodic parameter; and
channel variation information.

5. The method according to claim 1 or 3, wherein the sensing a frequency domain channel to obtain a first sensing result, and sensing a time domain channel to obtain a second sensing result comprises:

sensing the frequency domain channel based on a second sensing signal and a corresponding frequency domain resource to obtain the first sensing result related to the delay domain; and
sensing the time domain channel based on a third sensing signal and a corresponding time domain resource to obtain the second sensing result related to the Doppler domain.

6. The method according to claim 5, wherein the method further comprises:

adjusting, by the first network element based on a first parameter, a size of the frequency domain resource corresponding to the second sensing signal, wherein
the first parameter represents an interval between two adjacent frequency domain resources.

7. The method according to claim 6, wherein the second sensing signal comprises sensing signals of SC Type-1 and/or SC Type-2, and in a case that a value of the first parameter is 1, the frequency domain resource corresponding to the second sensing signal comprises all resources of SC Type-1 and/or SC Type-2; or
in a case that the value of the first parameter is greater than 1, the frequency domain resource corresponding to the second sensing signal comprises a part of the resources of SC Type-1 and/or SC Type-2.

8. The method according to claim 6, wherein the adjusting, by the first network element based on a first parameter, a size of the frequency domain resource corresponding to the second sensing signal comprises:

in a case that a maximum value of the delay domain is unable to be determined, determining, based on the first parameter, that the frequency domain resource corresponding to the second sensing signal comprises all resources of SC Type-1 and/or SC Type-2, wherein a value of the first parameter is 1; or
in a case that a delay of the delay domain in the first sensing result is less than the maximum value of the delay domain, reducing the size of the frequency domain resource corresponding to the second sensing signal by adjusting the first parameter.

9. The method according to claim 7, wherein

SC Type-1 comprises a pure OFDM-based sub-channel;
and/or

a sensing signal of SC Type-1 is determined based on at least one of a sub-channel frequency domain resource length in a frequency domain direction and the interval between two adjacent frequency domain resources.

10. The method according to claim 7, wherein

SC Type-2 comprises a frequency domain spread sequence sub-channel;
and/or
a sensing signal of SC Type-2 is determined based on at least one of a sub-channel frequency domain resource length in a frequency domain direction and the interval between two adjacent frequency domain resources.

11. The method according to claim 5, wherein the method further comprises:

adjusting, by the first network element based on a second parameter, a size of the time domain resource corresponding to the third sensing signal, wherein
the second parameter represents an interval between two adjacent time domain resources.

12. The method according to claim 11, wherein the third sensing signal comprises a sensing signal of SC Type-3, and in a case that a value of the second parameter is 1, the time domain resource corresponding to the third sensing signal comprises all resources of SC Type-3, or in a case that the value of the second parameter is greater than 1, the time domain resource corresponding to the third sensing signal comprises a part of the resources of SC Type-3.

13. The method according to claim 11, wherein the adjusting, by the first network element based on a second parameter, a size of the time domain resource corresponding to the third sensing signal comprises:

in a case that a maximum value of the Doppler domain is unable to be determined, determining, based on the second parameter, that the time domain resource corresponding to the third sensing signal comprises all resources of SC Type-3, wherein a value of the second parameter is 1;
or
in a case that the Doppler domain in the second sensing result is less than the maximum value of the Doppler domain, reducing the size of the time domain resource corresponding to the third sensing signal by adjusting the second parameter.

14. The method according to claim 12, wherein

SC Type-3 comprises a time domain-based spread sequence sub-channel;
and/or
a sensing signal of SC Type-3 is determined based on at least one of a sub-channel time domain resource length in a time domain direction and the interval between two adjacent time domain resources.

15. The method according to claim 1, wherein the method further comprises:

adjusting, by the first network element based on a third parameter and/or a fourth parameter, a size of the time-frequency domain resource corresponding to the target sensing signal, wherein
the third parameter represents an interval between two adjacent frequency domain resources, and the fourth parameter represents an interval between two adjacent time domain resources.

16. The method according to claim 15, wherein the target sensing signal comprises a sensing signal of SC Type-4, and in a case that a value of the third parameter is 1, and a value of the fourth parameter is 1, the time-frequency domain resource corresponding to the target sensing signal comprises all resources of SC Type-4; or
in a case that the value of at least one of the third parameter and the fourth parameter is greater than 1, the time-frequency domain resource corresponding to the target sensing signal comprises a part of the resources of SC Type-4.

17. The method according to claim 16, wherein

SC Type-4 comprises a time-frequency domain-based spread sequence sub-channel;
and/or
a sensing signal of SC Type-4 is determined based on at least one of a sub-channel frequency domain resource length in a frequency domain direction, a sub-channel time domain resource length in a time domain direction, the interval between two adjacent frequency domain resources, and the interval between two adjacent time domain resources.

18. The method according to claim 7, 12, or 16, wherein at least one of the sensing signal of SC Type-1, the sensing signal of SC Type-2, the sensing signal of SC Type-3, and the sensing signal of SC Type-4 is determined based on an RRC configuration.

19. A sensing apparatus, comprising:

a first sensing module, configured to: sense a frequency domain channel to obtain a first sensing result related to a delay domain, and sense a time domain channel to obtain a second sensing result related to a Doppler domain;
a determining module, configured to determine a target sensing signal and a corresponding target time-frequency domain resource based on the first sensing result and/or the second sensing result; and
a second sensing module, configured to sense a channel time domain and a channel frequency domain based on the target sensing signal and the target time-frequency domain resource.

20. A communication device, comprising a processor, a memory, and a program or instructions that are stored in the memory and that can be carried out on the processor, wherein when the program or the instructions are executed by the processor, the steps of the method according to any one of claims 1 to 18 are implemented.

21. A readable storage medium, wherein the readable storage medium stores a program or instructions, and when the program or instructions are executed by a processor, the steps of the method according to any one of claims 1 to 18 are implemented.

Front-Load (front-load, FL)
DMRS

Additional (additional, AD)
DMRS

PDCCH (2 symbols
(symbol))

PDCCH

PDCCH-DMRS

CSI-RS (8 ports (port))

PDCCH-DMRS (2
symbols (symbol))

TRS (one type of
CSI-RS)

PT-RS

Subcarrier (subcarrier)

Symbols (symbol)

FIG. 1

First antenna port

(Power) Power

Multi-path delay (MP Delay)

FIG. 2a

Second antenna port

FIG. 2b

#1 $N_{zc}$-point ZC, $x_q(n)$

#2 $N_{zc}$-point ZC, $x_q[(n + N_S) \bmod N_{ZC}]$

FIG. 3a

FIG. 3b

FIG. 4

501

A first network element senses a frequency domain
channel to obtain a first sensing result related to a
delay domain, and/or senses a time domain
channel to obtain a second sensing result related to
a Doppler domain

502

The first network element determines a target
sensing signal and a corresponding target time-
frequency domain resource based on the first
sensing result and/or the second sensing result

503

The first network element senses a channel time
domain and a channel frequency domain based on
the target sensing signal and the corresponding
target time-frequency domain resource

FIG. 5

$$N_f^{(1)}$$

| | | ... | | |

Resource element

FIG. 6a

$$N_f^{(2)}$$

FIG. 6b

**Resource element**

$$N_t^{(3)}$$

Symbol

FIG. 6c

FIG. 6d

FIG. 7a

FIG. 7b

FIG. 7c

Full resource, $\Delta_f = 1$ and $\Delta_t = 1$      Partial resource, $\Delta_f = 2$ and $\Delta_t = 2$

FIG. 7d

FIG. 8a

Frequency domain
sensing channel

Frequency
selective channel

Frequency
domain

SC Type (type) 2
sensing signal

SS  0  0  0

$\overleftrightarrow{\phantom{xxxxxx}} N_f^{(2)} \text{ Subcarrier} \overrightarrow{\phantom{xxxxxx}}$

Delay domain sensing
channel

$\tau_d$

Sensible path

## FIG. 8b

Time varying
channel

Time domain
sensing channel

Time
domain

SC Type (type) 3
sensing signal

0  0  0  SS  0  0  0  0

$\overleftrightarrow{\phantom{xxxx}} N_t^{(3)} \text{ OFDM symbol} \overrightarrow{\phantom{xxxx}}$

Doppler domain
sensing channel

$f_d$

Non-sensible
path

Sensible path

Non-sensible
path

## FIG. 8c

Time domain sensing
channel

Time varying channel

Time
domain

SC Type (type) 3
sensing signal

| 0 | SS | 0 | 0 |

$\longleftarrow N_t^{(3)}$ OFDM symbol $\longrightarrow$

Doppler domain
sensing channel

$f_d$

Sensible path

FIG. 8d

Frequency domain

| 0 | 0 | 0 | 0 |
| SS | 0 | 0 | 0 |
| 0 | 0 | 0 | 0 |
| 0 | 0 | 0 | 0 |

$N_f^{(4)}$ Subcarrier

Time domain

$N_t^{(4)}$ OFDM symbol

SC Type (type) 4 sensing signal

Delay domain
sensing channel

$\tau_d$

$N_t^{(3)}$ OFDM symbol

Doppler domain
sensing channel

$f_d$

Delay
domain

Doppler
domain

Delay domain
channel and
Doppler domain
channel

FIG. 8e

900

```
┌─────────────────────────────────────────┐
│                                          │
│    ┌──────────────────────────────┐      │
│    │     First sensing module     │      │
│    │             901              │      │
│    └──────────────────────────────┘      │
│                   │                      │
│    ┌──────────────────────────────┐      │
│    │     Determining module       │      │
│    │             902              │      │
│    └──────────────────────────────┘      │
│                   │                      │
│    ┌──────────────────────────────┐      │
│    │    Second sensing module     │      │
│    │             903              │      │
│    └──────────────────────────────┘      │
│                                          │
└─────────────────────────────────────────┘
```

FIG. 9

1000

Radio frequency unit 1001

Network module 1002

Memory 1009
Application
Operating system

1010

Interface unit 1008

Processor

Audio output unit 1003

Input unit 1004
Graphics processing unit 10041
Microphone 10042

User input unit 1007
Touch panel 10071
Another input device 10072

Display unit 1005
Display panel 10051

Sensor 1006

FIG. 10

1100

Network device

Processor
1101

Bus interface

Transceiver
1102

Memory
1103

FIG. 11

1200

Communication device

Processor
1201

Memory
1202

FIG. 12

## INTERNATIONAL SEARCH REPORT

| International application No. |
|---|
| **PCT/CN2023/109345** |

| A. | CLASSIFICATION OF SUBJECT MATTER |
|---|---|

H04B17/382(2015.01)i

According to International Patent Classification (IPC) or to both national classification and IPC

| B. | FIELDS SEARCHED |
|---|---|

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNKI, CNTXT, ENTXT, DWPI, 3GPP: 后5G, 6G, B5G, 感知, 时域, 频域, 时延域, 多普勒域, 信道, 5G and beyond, sensing, sense, time domain, frequency domain, time delay domain, Doppler, channel

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114325679 A (SOUTHERN UNIVERSITY OF SCIENCE AND TECHNOLOGY et al.) 12 April 2022 (2022-04-12) description, paragraphs [0021]-[0133], and figures 1-4 | 1, 4, 15, 19-21 |
| A | CN 114339690 A (SONY CORPORATION) 12 April 2022 (2022-04-12) entire document | 1-21 |
| A | CN 113541889 A (SHANGHAI LANGBO COMMUNICATION TECHNOLOGY CO., LTD.) 22 October 2021 (2021-10-22) entire document | 1-21 |
| A | US 2022110148 A1 (SAMSUNG ELECTRONICS CO., LTD.) 07 April 2022 (2022-04-07) entire document | 1-21 |
| A | WO 2022007932 A1 (VIVO MOBILE COMMUNICATION CO., LTD.) 13 January 2022 (2022-01-13) entire document | 1-21 |
| A | MEDIATEK INC. "R1-2102686_Traffic Model for XR and CG" *3GPP TSG RAN WG1 Meeting #104b-e*, 20 April 2021 (2021-04-20), entire document | 1-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 October 2023** | **18 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/109345**

| Patent document cited in search report | | | Publication date (day/month/year) | Patent family member(s) | | | Publication date (day/month/year) |
|---|---|---|---|---|---|---|---|
| CN | 114325679 | A | 12 April 2022 | None | | | |
| CN | 114339690 | A | 12 April 2022 | WO | 2022062280 | A1 | 31 March 2022 |
| CN | 113541889 | A | 22 October 2021 | CN | 113395764 | A | 14 September 2021 |
| | | | | WO | 2021180052 | A1 | 16 September 2021 |
| | | | | CN | 115225236 | A | 21 October 2022 |
| | | | | US | 2022417992 | A1 | 29 December 2022 |
| US | 2022110148 | A1 | 07 April 2022 | WO | 2022075722 | A1 | 14 April 2022 |
| | | | | KR | 20220046323 | A | 14 April 2022 |
| WO | 2022007932 | A1 | 13 January 2022 | CN | 113922848 | A | 11 January 2022 |

Form PCT/ISA/210 (patent family annex) (July 2022)

**REFERENCES CITED IN THE DESCRIPTION**

**Patent documents cited in the description**

- CN 202210916954